## Europäisches Patentamt
## European Patent Office
## Office européen des brevets

(19)

(11) Veröffentlichungsnummer: **0 004 859**
**B1**

(12) # EUROPÄISCHE PATENTSCHRIFT

(45) Veröffentlichungstag der Patentschrift:
12.08.81

(21) Anmeldenummer: 79100572.1

(22) Anmeldetag: 26.02.79

(51) Int. Cl.³: **C 08 J 3/12,** C 08 L 77/00,
C 08 K 3/36, C 09 D 3/00,
C 09 D 5/00

(54) Verfahren zur Herstellung von transparenten Beschichtungspulvern aus Copolyamiden und ihre Verwendung zum Beschichten von metallischen Formkörpern.

(30) Priorität: 19.04.78 DE 2817027

(43) Veröffentlichungstag der Anmeldung:
31.10.79 Patentblatt 79/22

(45) Bekanntmachung des Hinweises auf die Patenterteilung:
12.08.81 Patentblatt 81/32

(84) Benannte Vertragsstaaten:
CH DE FR GB IT

(56) Entgegenhaltungen:
DE-A-1 546 819
DE-B-1 047 425
DE-B-1 273 195

(73) Patentinhaber: CHEMISCHE WERKE HÜLS AG,
Postfach 1320, D-4370 Marl 1 (DE)

(72) Erfinder: Müller, Karl-Adolf, Dr., Neumarkstrasse 3,
D-4370 Marl (DE)
Erfinder: Feldmann, Rainer, Dr., Leverkusener
Strasse 27, D-4370 Marl (DE)

Anmerkung: Innerhalb von neun Monaten nach der Bekanntmachung des Hinweises auf die Erteilung des europäischer Patents im Europäischen Patentblatt kann jedermann beim Europäischen Patentamt gegen das erteilte europaische Patent Einspruch einlegen. Der Einspruch ist schriftlich einzureichen und zu begründen. Er gilt erst als eingelegt wenn die Einspruchsgebühr entrichtet worden ist (Art. 99(1) Europäisches Patentübereinkommen)

## Verfahren zur Herstellung von transparenten Beschichtungspulvern aus Copolyamiden und ihre Verwendung zum Beschichten von metallischen Formkörpern

Die Erfindung betrifft ein Verfahren zur Herstellung von transparenten Beschichtungspulvern nach dem Kaltmahlverfahren aus Copolyamiden, die mindestens 30 Gewichtsprozent Laurinlactam sowie mindestens 10 Gewichtsprozent Reste von aliphatischen Dicarbonsäuren mit 4 bis 12 Kohlenstoffatomen und äquivalente Reste von verzweigten aliphatischen oder cyclischen Diaminen mit 4 bis 12 Kohlenstoffatomen enthalten, und die durch hydrolytische Lactampolymerisation erhalten worden sind.

Die Herstellung von Polyamidpulvern ist grundsätzlich bekannt. Sie werden erhalten durch Fällen des Polyamids aus Lösungen oder Mahlen des Polyamidgranulats, vorzugsweise bei tiefen Temperaturen unter einer Inertgasatmosphäre. Es ist auch bekannt, die Beschichtungspulver in verschiedener Weise zu variieren. Jedoch hat es sich herausgestellt, daß es notwendig ist, die Herstellung der Polyamidpulver und deren Korngröße auf die Art der Verwendung abzustimmen.

Es ist auch grundsätzlich bekannt, Polyamide herzustellen, die pulverförmige Kieselsäuren enthalten. Derartige Formmassen, welche die Kieselsäuren als Mattierungsmittel oder Gleitmittel in relativ großen Mengen enthalten, sind nicht als Beschichtungspulver geeignet (DE-A 1 047 425, DE-A 1 273 195, DE-A 1 944 619).

Aus der DE-A 2 631 231 ist ein verbessertes Verfahren zur Herstellung von Beschichtungspulvern aus Copolyamiden bekannt, die mindestens 30 Gewichtsprozent Laurinlactam enthalten. Diese Beschichtungspulver werden erhalten, indem man die Copolyamide vor dem Kaltmahlen einer molekülorientierenden Behandlung unterwirft und nach dem Mahlen auf eine bestimmte Korngrößenverteilung sichtet. Diese Pulver sind insbesondere geeignet zum Beschichten von Glasflaschen. Dieses Verfahren ist insoweit noch nicht vollbefriedigend, weil die molekülorientierende Vorbehandlung langwierig und aufwendig ist.

Aufgabe der Erfindung ist es daher, ein verbessertes Verfahren zur Herstellung von Beschichtungspulvern zur Verfügung zu stellen, die sich problemlos auftragen lassen und zu glatten Überzügen führen, die eine ausreichende Beständigkeit gegenüber heißen alkalischen Reinigungsmitteln aufweisen, die sich jedoch einfacher herstellen lassen. Die Lösung dieser Aufgabe gelingt dadurch, daß man in den Copolyamiden vor oder nach dem Kaltmahlen in Mengen von 0,1 bis kleiner als 0,15 Gewichtsprozent, bezogen auf die Copolyamide, pulverförmige Kieselsäure verteilt, wobei bei einer durch Mahlen erhaltenen Kieselsäure deren Oberfläche, gemessen nach der BET-Methode, $380 \pm 30$ m$^2$/g und die mittlere Größe der Primärteilchen 7 nm, bei einer durch Fällen erhaltenen Kieselsäure die Oberfläche entsprechend $190 \pm 20$ m$^2$/g und die mittlere Größe der Primärteilchen 18 nm beträgt, und das gemahlene Pulver auf die gewünschte Korngrößenverteilung einstellt.

Derart ausgewählte Beschichtungspulver lassen sich wesentlich einfacher herstellen. Sie können einwandfrei versprüht werden und ergeben fehlerfreie glatte Schichten, deren Transparenz und Haftfähigkeit auch nach wiederholter Einwirkung von heißen alkalischen Reinigungsmitteln noch gut ist.

Geeignete Copolyamide sind solche, die mindestens 30 Gewichtsprozent Laurinlactam enthalten. Vorteilhaft liegt der Anteil an Laurinlactam zwischen 30 und 80, vorzugsweise zwischen 35 und 60 Gewichtsprozent. Neben Laurinlactam enthalten die Copolyamide einen oder mehrere Reste von $\omega$-Aminosäuren mit 4 bis 11 Kohlenstoffatomen, wie Caprolactam, Capryllactam, Aminoundecansäure und/oder Reste von aliphatischen Dicarbonsäuren mit 4 bis 12 Kohlenstoffatomen, wie Adipinsäure, Azelainsäure, Sebacinsäure, Dodecandisäure und äquivalente Reste von aliphatischen oder cyclischen Diaminen mit 4 bis 12 Kohlenstoffatomen und mindestens 10 Gewichtsprozent Reste von aliphatischen Dicarbonsäuren mit 4 bis 12 Kohlenstoffatomen, wie Adipinsäure, Azelainsäure, Sebacinsäure, Dodecandisäure und von verzweigten aliphatischen oder cyclischen Diaminen mit 4 bis 12 Kohlenstoffatomen, wie Trimethylhexamethylendiamin, Isophorondiamin. Vorteilhaft beträgt der Anteil der zuletzt genannten, verzweigte Diamine enthaltenden Komponente 10 bis 40 Gewichtsprozent, vorzugsweise 10 bis 25 Gewichtsprozent.

Insbesondere werden als Copolyamide mindestens Terpolyamide eingesetzt. Beispielsweise seien genannt Copolyamide aus:

| | |
|---|---|
| 30 bis 80 | Gewichtsprozent Laurinlactam, |
| 10 bis 40 | Gewichtsprozent Trimethylhexamethylendiamin und/oder Isophorondiamin und die äquivalente Menge an aliphatischen offenkettigen Dicarbonsäuren mit 4 bis 12 Kohlenstoffatomen und |
| 10 bis 40 | Gewichtsprozent an Resten von $\omega$-Aminosäuren mit 4 bis 11 Kohlenstoffatomen und/oder unverzweigten aliphatischen Diaminen mit 4 bis 12 Kohlenstoffatomen und äquivalenten Mengen an aliphatischen offenkettigen Dicarbonsäuren mit 4 bis 12 Kohlenstoffatomen. |

Besonders geeignet sind solche Copolyamide, in welchen die beiden Diamine Trimethylhexamethylendiamin und Isophorondiamin in etwa äquimolaren Mengen enthalten sind.

Beispielsweise seien besonders genannt:

Copolyamid aus 58,8 Gewichtsprozent Laurinlactam, 16,9 Gewichtsprozent Caprolactam, 12,1 Gewichtsprozent Adipinsäure, 6,3 Gewichtsprozent Isophorondiamin und 5,9 Gewichtsprozent Trimethylhexamethylendiamin, Copolyamid aus 57,6 Gewichtsprozent Laurinlactam, 10 Gewichtsprozent Caprolactam, 16,1 Gewichtsprozent Adipinsäure, 8,4 Gewichtsprozent Isophorondiamin und 7,9 Gewichtsprozent Trimethylhexamethylendiamin, Copolyamid aus 53,4 Gewichtsprozent Laurinlactam, 8 Gewichtsprozent Caprolactam, 10 Gewichtsprozent Isophorondiamin, 9,5 Gewichtsprozent Trimethylhexamethylendiamin, 19,1 Gewichtsprozent Adipinsäure.

Die Herstellung der Copolyamide erfolgt durch die bekannte hydrolytische Polykondensation bei Temperaturen zwischen 250 und 300°C und gegebenenfalls in Gegenwart der bekannten kettenregelnden Substanzen, wie Adipinsäure und Phosphorsäure. Die Werte für $\eta_{rel}$ liegen üblicherweise zwischen 1,45 und 1,65 (gemessen in m-Kresol bei einer Konzentration von 0,5 g/100 ml bei 25°C).

Für das Herstellen der Pulver ist ausschließlich das sogenannte Kaltmahlverfahren geeignet. Die Granulate werden hierbei unter einer Inertgasatmosphäre, vorzugsweise nach Vorkühlung in flüssigem Stickstoff, gemahlen, so daß das gemahlene Pulver mit einer Temperatur zwischen −50 und 0°C, vorzugsweise zwischen −40 und −20°C, die Mühle verläßt.

Je nach Verarbeitungsmethode werden die Pulver auf eine bestimmte Korngrößenverteilung gebracht; das geschieht üblicherweise durch Sieben oder Sichten, wobei die geeigneten Fraktionen erhalten werden. Bei einer Verarbeitung nach dem elektrostatischen Verfahren oder elektrostatischen Wirbelsinterverfahren müssen 100 bis >50% des Pulvers einen Kornanteil zwischen 30 und 100 μm besitzen und 0 bis <50% einen Kornanteil unter 30 μm. Der Feinanteil soll demnach maximal <50% betragen, vorzugsweise 20 bis 40%. Gröbere Anteile (größer als 100 μm) dürfen nicht vorhanden sein. Bei Polyamidpulvern, die nach dem Wirbelsinterverfahren verarbeitet werden, ist dagegen eine Korngrößenverteilung zwischen 30 und 300, vorzugsweise zwischen 60 und 250 μm einzustellen.

Die pulverförmigen Kieselsäuren können vor dem Mahlen den Granulaten zugemischt werden. Dies kann durch Mischen oder Auftrommeln geschehen. Es ist aber auch möglich, sie erst den gemahlenen Pulvern zuzumischen. Die pulverförmigen Kieselsäuren erfordern eine Auswahl nach Art und Menge. Die zugesetzte Menge muß, bezogen auf die Copolyamide, kleiner als 0,15 Gewichtsprozent betragen. Die optimale Menge beträgt 0,02 bis 0,1, bevorzugt 0,03 bis 0,08 Gewichtsprozent. Außerdem ist die Oberfläche und die mittlere Größe der Primärteilchen der eingesetzten Kieselsäurepulver kritisch hinsichtlich der Herstellungsmethode der Kieselsäurepulver. Gefällte Kieselsäurepulver sollen eine Oberfläche von $190 \pm 20$ m²/g besitzen, bestimmt nach der BET-Methode (Brinauer, Emmet und Teller J. Anm. Chem. Loc. 60, 309 [1938]). Die mittlere Größe der Primärteilchen soll 18 nm betragen (Endter, Gebauer, Optik 13, 97−101 [1956]). Bei gemahlenen Kieselsäurepulvern liegen die entsprechenden Werte bei $380 \pm 30$ m²/g und 7 nm. Bevorzugt werden die gefällten Kieselsäurepulver eingesetzt. Es ist zwar bekannt, daß erst durch Zusatz von ≥0,2 Gewichtsprozent Kieselsäurepulver die Wirbelbarkeit von Thermoplastpulvern und deren Fließfähigkeit zu verbessern. Die mit solchen Pulvern erhaltenen Überzüge haben jedoch ein unruhiges und narbiges Aussehen. Nur durch die Auswahl nach Art und Menge der eingesetzten Kieselsäurepulver, als auch durch Auswahl der Copolyamide, gelingt es, sowohl einwandfreie Überzüge als auch gutes Wirbeln und Fließen der Pulver zu erreichen. Die nach der Erfindung erhaltenen Beschichtungspulver ergeben einwandfreie, harte, transparente Überzüge, die insbesondere zum Beschichten von metallischen Formkörpern eingesetzt werden, z. B. Beschlägen, wie Tür- oder Fenstergriffe, oder beschrifteten Formkörpern, wie Türschilder, insbesondere aus Aluminium und Messing. Diese Teile werden damit gegen oxidative Angriffe bzw. Anlaufen geschützt. Die Beschichtungsmittel haben gegenüber den bisher üblichen Lacken den besonderen Vorzug, daß nicht mit Lösungsmitteln gearbeitet werden muß und der Überzug wesentlich haltbarer ist gegen Abreiben als z. B. durch Lackieren erhaltene dünne Überzüge.

Die aufgebrachten Überzüge haben im allgemeinen eine Dicke von 80 bis 500, insbesondere von 80 bis 400 μm.

Die Erfindung ist nachstehend anhand von Ausführungsbeispielen näher erläutert. Die $\eta_{rel}$ Lösungsviskositäten wurden bei 25°C in m-Kresol bei einer Konzentration von 0,5 g/100 ml gemessen.

## Beispiel 1

Ein Copolyamid, das aus 58,8 Gewichtsprozent Laurinlactam, 16,9 Gewichtsprozent Caprolactam, 12,1 Gewichtsprozent Adipinsäure, 5,9 Gewichtsprozent Trimethylhexamethylendiamin, 6,3 Gewichtsprozent Isophorondiamin und in Gegenwart von 0,05 Gewichtsprozent Phosphorsäure durch hydrolytische Polymerisation hergestellt worden ist, und mit einem $\eta_{rel}$ von 1,5 (gemessen in 0,5%iger Lösung Methakresol bei 25°C), wird mit Kühlung durch flüssigen Stickstoff (−190°C) vorgekühlt und bei −35°C (Temperatur des Mahlguts) gemahlen. Das Grobpulver >250 μm wird abgesiebt. In dieses Pulver wird in einem Schnellmischer 0,05 Gewichtsprozent einer gemahlenen Kieselsäure mit einer Oberfläche von $380 \pm 30$ m²/g eingemischt. Das Pulver wirbelt und fließt gut, zeigt bei der Wirbelsinterbeschichtung glatte Oberflächen mit ausgezeichneter Transparenz. Die Beschichtung besitzt eine gute Beständigkeit beim Heißwassertest.

## Beispiel 2

Es wird wie in Beispiel 1 gearbeitet, nur daß anstelle der gemahlenen 0,1 Gewichtsprozent einer gefällten Kieselsäure mit 190 m²/g zugemischt werden. Es wird ein Pulver mit den gleich guten Fließ- und Beschichtungseigenschaften wie in Beispiel 1 erhalten.

## Beispiel 3

Es wird wie in Beispiel 1 gearbeitet, nur daß 0,05 Gewichtsprozent einer gefällten Kieselsäure mit 190 m²/g Oberfläche zugemischt werden. Auch hier wird ein Pulver mit guter Wirbelbarkeit erhalten, das Beschichtungen mit sehr guter Transparenz, guter Heißwasserbeständigkeit und noch glatteren Oberflächen als in den Beispielen 1 und 2 ergibt.

## Vergleichsbeispiel 1

Ein wie in Beispiel 1 hergestelltes Copolyamid aus 60 Gewichtsprozent Laurinlactam, 25 Gewichtsprozent Caprolactam und 15 Gewichtsprozent Adipinsäure-Hexamethylendiaminsalz mit einem $\eta_{rel}$ von 1,5 wird, wie in Beispiel 1 beschrieben, in ein Pulver umgewandelt. In dieses Pulver werden im Schnellmischer 0,2 Gewichtsprozent einer gemahlenen Kieselsäure mit einer Oberfläche von 200 ± 25 m²/g eingemischt. Das Pulver zeigt ein gutes Wirbelverhalten, die Beschichtungen haben jedoch unruhige Oberflächen bei nicht ausreichender Transparenz. Die Beständigkeit gegenüber heißem Wasser ist befriedigend.

## Vergleichsbeispiel 2

Ein in gleicher Weise hergestelltes Copolyamid aus 36 Gewichtsprozent Laurinlactam, 32 Gewichtsprozent Caprolactam und 32 Gewichtsprozent Adipinsäure-Hexamethylendiaminsalz mit einem $\eta_{rel}$ von 1,6 wird, wie in Beispiel 1 beschrieben, in ein Pulver umgewandelt. In dieses Pulver werden im Schnellmischer 0,2% einer gemahlenen Kieselsäure mit einer Oberfläche von 200 ± 25 m²/g eingemischt. Das Pulver zeigt ein gutes Wirbelverhalten, die Beschichtungen haben eine gute Transparenz, bei allerdings nicht befriedigender Oberfläche und ungenügender Heißwasserbeständigkeit.

## Vergleichsbeispiel 3

In ein wie in Beispiel 1 beschrieben hergestelltes Copolyamidpulver werden in einem Schnellmischer 0,2 Gewichtsprozent einer gemahlenen Kieselsäure mit einer Oberfläche von 200 ± 25 m²/g eingemischt. Das Pulver wirbelt gut und gibt beim Wirbelsinterauftrag Beschichtungen mit sehr guter Transparenz, guter Heißwasserbeständigkeit, aber nicht befriedigender Oberflächenqualität.

## Vergleichsbeispiel 4

In ein wie in Beispiel 1 beschrieben hergestelltes Copolyamidpulver werden in einem Schnellmischer 0,05 Gewichtsprozent einer gemahlenen Kieselsäure mit einer Oberfläche von 200 ± 25 m²/g eingemischt. Das Pulver wirbelt schlecht und gibt beim Wirbelsinterauftrag Beschichtungen mit schlechten Oberflächen, aber sehr guter Transparenz und guter Heißwasserbeständigkeit.

Die Ergebnisse der Beispiele und Vergleichsbeispiele sind in der nachfolgenden Tabelle 1 zusammengefaßt.

Tabelle 1

| Copolyamid | Kieselsäure | | | | Pulver | Beschichtung | | |
|---|---|---|---|---|---|---|---|---|
| | ge-fällt | ge-mahlen | Oberfläche m$^2$/g | Menge Gew.-% | Wirbeln/ Fließen | Ober-fläche | Trans-parenz | Beständigkeit gegen heißes Wasser |
| Beispiel 1 | | × | 380±30 | 0,05 | + | + | ++ | + |
| Beispiel 2 | × | | 190 | 0,1 | + | + | ++ | + |
| Beispiel 3 | × | | 190 | 0,05 | + | ++ | ++ | + |
| Vergleichsbeispiel 1 | | × | 200±25 | 0,2 | + | − | − | ○ |
| Vergleichsbeispiel 2 | | × | 200±25 | 0,2 | + | − | + | − |
| Vergleichsbeispiel 3 | | × | 200±25 | 0,2 | + | − | ++ | + |
| Vergleichsbeispiel 4 | | × | 200±25 | 0,05 | − | − | ++ | + |

Bewertung: ++ sehr gut
+ gut
○ befriedigend
− nicht befriedigend

**Patentansprüche**

1. Verfahren zur Herstellung von transparenten Beschichtungspulvern nach dem Kaltmahlverfahren aus Copolyamiden, die mindestens 30 Gewichtsprozent Laurinlactam sowie mindestens 10 Gewichtsprozent Reste von aliphatischen Dicarbonsäuren mit 4 bis 12 Kohlenstoffatomen und äquivalente Reste von verzweigten aliphatischen oder cyclischen Diaminen mit 4 bis 12 Kohlenstoffatomen enthalten, und die durch hydrolytische Lactampolymerisation erhalten worden sind, dadurch gekennzeichnet, daß man in den Copolyamiden vor oder nach dem Kaltmahlen in Mengen von 0,01 bis kleiner als 0,15 Gewichtsprozent, bezogen auf die Copolyamide, pulverförmige Kieselsäure verteilt, wobei bei einer durch Mahlen erhaltenen Kieselsäure deren Oberfläche, gemessen nach der BET-Methode, 380±30 m$^2$/g und die mittlere Größe der Primärteilchen 7 nm, bei einer durch Fällen erhaltenen Kieselsäure die Oberfläche entsprechend 190±20 m$^2$/g und die mittlere Größe der Primärteilchen 18 nm beträgt, und das gemahlene Pulver auf die gewünschte Korngrößenverteilung einstellt.

2. Verwendung der gemäß Anspruch 1 hergestellten Beschichtungspulver zum Beschichten von metallischen Formkörpern.

**Claims**

1. A process for the production of transparent coating powders by the cold grinding process using copolyamides, which contain at least 30% by weight lauryl lactam as well as at least 10% by weight residues of aliphatic dicarbonic acids with 4 to 12 carbon atoms and equivalent residues of branched aliphatic or cyclic diamines with 4 to 12 carbon atoms, and which have been obtained by hydrolytic lactam polymerization, characterized in that, prior or subsequent to cold grinding, powdery silicic acid is dispersed in the copolyamides, in quantities of 0.01 to less than 0.15% by weight related to the copolyamides, wherein the surface of a silicic acid obtained by grinding — measured by the BET method — is 380+30 m$^2$/g and the mean size of the primary particles is 7 nm, and wherein the surface of a silicic acid obtained by precipitation — measured as above — is 190±20 m$^2$/g and the mean size of the primary particles is 18 nm, and in that the ground powder is subjected to grading until the derired grain size distribution is obtained.

2. Utilization of the coating powders produced according to claim 1 for coating metallic mouldings.

**Revendications**

1. Procédé de préparation de poudres de copolyamide transparentes pour revêtement, d'après le procédé de broyage à température basse, contenant au moins 30 pourcent en poids de lactame laurique et au minimum 10 pourcent en poids de radicaux d'acides dicarboxyliques aliphatiques ayant de 4 à 12 atomes de carbone, et des radicaux équivalents de diamines ramifiées aliphatiques ou cycliques ayant de 4 à 12 atomes de carbone, copolyamides que l'on a obtenus par polymérisation hydrolytique du lactame, caractérisé par le fait que on répartit dans les copolyamides, avant ou après le broyage à température basse, en quantités allant de 0,01 à <0,15 pourcent en poids, rapporté aux copolyamides, de l'acide silicique pulvérulent, la surface de l'acide silicique obtenue par broyage et mesurée selon la méthode BET étant de $380 + 30$ m$^2$/g et la grosseur moyenne des particules primaires de 7 nm, et la surface de l'acide silicique obtenue par précipitation étant de $190 + 20$ m$^2$/g et la grosseur moyenne des particules primaires de 18 nm, et on ajuste la poudre broyée à la répartition granulométrique souhaitée.

2. Utilisation des poudres pour revêtement préparées selon la revendication 1 pour revêtir des pièces moulées métalliques.